# EUROPÄISCHE PATENTSCHRIFT

(11) **EP 1 149 056 B1**
(45) Veröffentlichungstag und Bekanntmachung des Hinweises auf die Patenterteilung: **16.02.2005**
(21) Anmeldenummer: 00971367.8
(22) Anmeldetag: 12.10.2000
(51) Int. Cl.: C03B 19/14

(54) **ANORDNUNG ZUR ERZEUGUNG OPTISCH HOMOGENER, SCHLIERENFREIER QUARZGLASKÖRPER DURCH FLAMMENHYDROLYSE**
DEVICE FOR GENERATING AN OPTICALLY HOMOGENEOUS, STREAK-FREE QUARTZ GLASS BODY HAVING A LARGE DIAMETER
DISPOSITIF DE FABRICATION DE CORPS EN VERRE DE QUARTZ OPTIQUEMENT HOMOGENES, EXEMPTS DE STRIES, ET DE DIAMETRES IMPORTANTS

(30) Priorität: 14.10.1999 DE 19950321
(43) Veröffentlichungstag der Anmeldung: 31.10.2001
(73) Patentinhaber: SCHOTT AG, 55122 Mainz (DE)
(72) Erfinder: BAUCH, Hartmut, 61276 Weilrod (DE); HACK, Hraban, 55126 Mainz (DE); MARTIN, Rolf, 07743 Jena (DE); MENZEL, Andreas, 07745 Jena (DE); RÜDIGER, Frank, 07745 Jena (DE); SCHINDELBECK, Thomas, 55131 Mainz (DE); SCHMIDT, Matthias, 07749 Jena (DE); SCHOLZ, Roland, 07745 Jena (DE); VOITSCH, Andreas, 07745 Jena (DE)
(74) Vertreter: Bock, Gerhard, Dipl.-Ing.
(86) Internationale Anmeldenummer: PCT/EP2000/010050
(87) Internationale Veröffentlichungsnummer: WO 2001/027044

(56) Entgegenhaltungen:
- EP-A- 0 878 451
- DE-A- 4 203 287
- US-A- 5 696 038
- PATENT ABSTRACTS OF JAPAN vol. 1995, no. 8, 29. September 1995 (1995-09-29) & JP 07 138028 A (SHIN ETSU CHEM. CO. LTD.), 30. Mai 1995 (1995-05-30)
- PATENT ABSTRACTS OF JAPAN vol. 1999, no. 13, 30. November 1999 (1999-11-30) & JP 11 209128 A (NIKON CORP), 3. August 1999 (1999-08-03)

## Beschreibung

Die Erfindung betrifft eine Anordnung zur Erzeugung optisch homogener, schlierenfreier Quarzglaskörper mit großen Durchmessern gemäß der Gattung der Patentansprüche. Mit Hilfe der Erfindung sollen Körper aus synthetischem Quarzglas mit einer hohen Homogenität der optischen Eigenschaften, wie Brechzahlverteilung, Transmission und Fluoreszenz, insbesondere für den Einsatz bei Wellenlängen unterhalb von 250 nm hergestellt werden.

Die für den Einsatz im UV-Bereich, z.B. für Excimerlaser- oder Mikrolithographie-Anwendungen bei Wellenlängen unterhalb von 250 nm, notwendige hohe Transmission und Strahlenfestigkeit erfordert eine extrem hohe Reinheit der hergestellten Quarzglaskörper, die im allgemeinen durch die Herstellung über die Gasphase gewährleistet wird. Im Flammenhydrolyse-Verfahren wird eine gasförmige Si-Ausgangsverbindung zusammen mit Sauerstoff und einem Brenngas in einer Flamme zu SiO₂-Partikeln umgesetzt, die an der Oberfläche des mit einem Brenner beheizten Quarzglaskörpers glasig aufgeschmolzen werden.
Die steigenden Ansprüche in der Mikrolithographie an eine Vergrößerung der numerischen Apertur bei gleichzeitiger hoher Homogenität der eingesetzten optischen Komponenten bedingen die Herstellung immer größerer Quarzglasrohlinge. Die in der herkömmlichen Produktionsweise mit einem relativ zur Aufschmelzoberfläche starr fixierten Einzelbrenner produzierten Quarzglaszylinder sind jedoch hinsichtlich des erreichbaren Maximaldurchmessers begrenzt. Eine Umformung der mit diesem Verfahren produzierten Glaszylinder zu Scheiben größeren Durchmessers erfordert Temperaturen > 1700 °C, ist technisch aufwendig und birgt die Gefahr negativer Materialveränderungen, welche Transmission und Laserbeständigkeit des Quarzglases in ungünstiger Weise beeinflussen. Für die direkte Abscheidung am gewünschten Endformat ist deshalb eine Verbreiterung des Abscheidebereichs notwendig, wie sie in bekannter Weise durch den Einsatz mehrerer Brenner oder eine Relativbewegung zwischen einem Brenner und dem Glaskörper in einer Ebene normal zur Achse des Quarzglaskörpers oder eine Kombination beider Verfahren erzielt wird. Eine besondere technologische Herausforderung dabei ist, daß die an den Quarzglaskörper gestellten Anforderungen bezüglich der Homogenität der optischen Eigenschaften auch bei größeren Durchmessern auf einer wesentlich größeren Fläche eingehalten werden müssen. Bei den bisher in der Mikrolithographie verwendeten Wellenlängen der Quecksilberdampflampe (365 nm -i - Linie und 436 nm - G Linie) betrifft dies vor allem die Homogenität der Brechzahlverteilung.
Unterhalb von 250 nm muß jedoch besonders sowohl die Einhaltung einer konstant hohen Transmission über die gesamte optisch nutzbare Fläche beachtet werden als auch ein ausgezeichnetes Damageverhalten über diese Fläche gewährleistet sein. Bei einer Verwendung dieser kurzen Wellenlängen strahlt man bereits in der Nähe der Bandkante des Glases ein. Damit wirken sich schon kleinste produktionsbedingte Struktur- und Konzentrationsänderungen im Glas, die zu einer Verschiebung der Bandkante führen, auf die Transmission unterhalb von 200 nm mit Transmissionsveränderungen in einer für die Mikrolithographie relevanten Größenordnung von einigen 0,001 cm⁻¹ (Angabe als dekadischer Absorptionskoeffizient) und mehr aus. Auf Grund der mit λ⁴ ansteigenden Lichtstreuung liegt auch der Streuanteil für Quarzglas, in Abhängigkeit von der spezifischen Glasstruktur, in einer Größenordnung von einigen 0,001 cm⁻¹. Darüber hinaus sind zahlreiche intrinsische Defekte, wie z.B. Cl-Einschlüsse, OH-Gruppen, Sauerstofffehlstellen etc., im synthetischen Quarzglas bekannt, die Absorptionsbanden im Bereich zwischen 150 nm und 250 nm aufweisen. Aufgrund dieser starken Abhängigkeit der Transmission unterhalb von 250 nm von den Materialeigenschaften kommt es bei den herkömmlichen Herstellungsverfahren zu signifikanten lokalen Transmissionsänderungen innerhalb eines Quarzglaskörpers.

Die JP 01-024032 A beschreibt die Abscheidung von Quarzglas in einem rotierenden zylindrischen Gefäß, wobei der dafür benutzte Brenner zur Zuführung einer gasförmigen Si-Verbindung sowie der Brenngase eine rotierende oder lineare Bewegung ausführt. In einer weiteren Ausführungsform wird ein zweiter Brenner, der ausschließlich mit Brenngasen betrieben wird, zur zusätzlichen Beheizung eingesetzt. Die Abscheidung der SiO₂-Partikel in einem Gefäß führt unvermeidlich zu starken Änderungen der Strömungs- und damit auch Abscheidebedingungen während des Prozesses. Dies hat eine starke Ausbildung von Schlieren im wesentlichen senkrecht zur Aufwachsrichtung zur Folge.
In der JP 06-234531 A wird ein O₂, H₂ und eine Si-Verbindung liefernder Brenner in einer Ebene relativ zum sich bildenden Quarzglasingot gemäß der am Ingotkopf gemessenen Temperaturverteilung bewegt. Die Temperaturverteilung wird über eine IR-Kamera in einen Computer eingegeben, der zur Ansteuerung eines den Ingot aufnehmenden x,y-Tisches dient.
Die EP 0 735 006 A beinhaltet eine Bewegung des Quarzglasingots in x-und y-Richtung senkrecht zur Aufwachsrichtung des synthetischen Quarzglases. Das hergestellte Quarzglas enthält Schlieren, die im wesentlichen senkrecht zur Aufwachsrichtung liegen.
Die US 5,696,038 A beschreibt eine relative, oszillatorische Bewegung zwischen einer Quelle von SiO₂-Partikeln und dem entstehenden Quarzglaskörper, wobei die Bewegung senkrecht zur Dicke des Körpers mit einer definierten Periodizität erfolgt. Im einzelnen werden Periodendauern beschrieben, die eine bestimmte Mindestschichtdicke für das Aufwachsen während einer Periode ermöglichen, eine bestimmte Mindestdauer haben, spiralförmige Bahnkurven aufweisen oder eine Ausbildung von Schlieren begrenzen. Die Abscheidung des SiO₂ erfolgt in einem flachen Gefäß, welches von oben durch mehrere in einem Ofenoberteil fixierte Brenner beheizt wird. Das hergestellte Material enthält Schlieren senkrecht zur Aufwachsrichtung.
Die EP 0 850 199 A bezieht sich auf die Probleme, welche die durch die Bewegung des Quarzglaskörpers entstehende Luftströmungen in einer Konstruktion gemäß Patent US 5,696,038 A verursachen. Beansprucht wird eine Methode und Vorrichtung zur Aufrechterhaltung eines konstanten Luftstroms um den aufwachsenden Quarzkörper, während dieser eine oszillatorische Bewegung ausführt. Die Abscheidung des SiO₂ erfolgt analog US 5,696,038 A in einem flachen Gefäß, welches von oben durch mehrere feststehende Brenner beheizt wird. Das hergestellte Material enthält ebenfalls Schlieren senkrecht zur Aufwachsrichtung.
Bei allen bisher beschriebenen bekannten Lösungen besteht darüber hinaus auf Grund der ungünstigen Strömungsbedingungen die Gefahr, neben Schlieren auch mikrostrukturelle Defekte oder Blasen im Material zu erzeugen.
Die EP 0 720 970 A offenbart Quarzglas mit einer Strukturtemperatur kleiner gleich 1200 K, einem OH-Gehalt von mindestens 1000 ppm und einer Reintransmission von mindestens 99,6% für 193 nm. Auf die Gleichmäßigkeit der Transmission über die Fläche eines Quarzglaskörpers wird darin nicht eingegangen.
Das US 5,696,624 A begehrt Schutz auf Quarzglas mit einer Reintransmission von größer 99,9%, bezogen auf 1cm Probendicke, über einen Durchmesser von mindestens 150 mm, vor und nach Beschuß mit 106 Pulsen eines ArF-Lasers. Es ist bekannt, das die Reintransmission im UV nur mit großem Aufwand exakt meßbar ist. Jede Art von Oberflächenverunreinigung und -defekten (z.B. durch die Politur) führt zu einer starken Verringerung der UV-Transmission, die bei hochtransparentem Material ein Mehrfaches des Meßeffekts der Reintransmission ausmachen. Aus diesem Grund ist die Reinigung der Proben von zentraler Bedeutung. Darüber wird in dieser Vorveröffentlichung nichts ausgesagt. Im wesentlichen lassen sich Oberflächeneffekte durch dickenabhängige Meßreihen eliminieren. Im beschriebenen Meßverfahren der US 5,696,624 A wurden zwei Proben mit Längen von 2 mm und 12mm eingesetzt. Verwendet wurde ein Zweistrahl-Spektrophotometer, auf eine nach dem Stand der Technik notwendige Spülung des Spektrometers mit einem im UV nicht absorbierenden Spülgas, z.B. N₂ wird in der Schrift jedoch nicht eingegangen. Fehlt diese, kommt es durch die UV-Absorption des Sauerstoffs zu einer Verfälschung der Transmission zu höheren Werten hin. Es wird die Transmission bei 193 nm in Relation zu derjenigen bei 365 nm bestimmt, deren Wert für die Reintransmission willkürlich auf 100% festgesetzt wird. Dieses Meßverfahren ist offensichtlich nicht zulässig, da die angegebenen Reintransmissionen von größer als 99,9% cm⁻¹ physikalisch nicht sinnvoll sind. In der US 5,696,624 A wird die Reintransmission in üblicher Weise definiert als gemessene spektrale Transmission abzüglich der Reflektionsverluste an der Oberfläche. Bekanntlich liefern die mit der 4. Potenz der Wellenlänge wachsenden Streuverluste im UV einen signifikanten Beitrag zu den Verlusten an Reintransmission. So wird in der bereits genannten EP 0 720 970 A ein Streuverlust der Transmission von mindestens 0,18%, bezogen auf einen Zentimeter angegeben; in Liberman et al., Opt. Lett., Vol. 24 (1999), S. 58-60, wird ein dekadischer Volumenstreukoeffizient von 0,0008 cm⁻¹ angeführt, was ebenfalls einem Transmissionsverlust von 0,18%, bezogen auf einen Zentimeter entspricht. Damit wird allein mit diesem Streubeitrag, auch ohne zusätzliche Absorptionsbeiträge aus dem Bereich der Absorptionskante oder von intrinsischen Verunreinigungen, die wie oben dargelegt, bei den betrachteten Wellenlängen ebenfalls einen nicht zu vernachlässigenden Beitrag liefern, eine Transmission von 100% in physikalisch nicht sinnvoller Weise überschritten.
In der WO 98/40319 A wird eine nach einem Horizontalverfahren arbeitende Aufschmelzvorrichtung beschrieben, mit der eine gute optische Homogenität, hohe Transmission, niedrige Fluoreszenz und hohe Laserbeständigkeit erreichbar sind. Diese Aufschmelzvorrichtung ist im wesentlichen rotationssymmetrisch gestaltet, weist einen günstigen Abstand zwischen ihrer Innenkontur und der Kappe des aufzuschmelzenden Quarzglaskörpers auf und beinhaltet eine Geometrie, die sich auf den Wärmehaushalt in der Vorrichtung günstig auswirkt. Der Durchmesser der hergestellten schichtenfreien Vorform ist jedoch vergleichsweise gering; für größere Endprodukte muss die Vorform arbeitsaufwendig thermisch umgeformt werden.

Aufgabe der vorliegenden Erfindung ist es daher, eine gattungsgemäße Anordnung zu schaffen, mit der Vorformen aus schlierenfreiem Quarzglas mit großen Durchmessern (vorzugsweise > 180 mm) herstellbar sind, wobei das Quarzglas über den gesamten Durchmesser keine mikrostrukturellen Defekte, aber eine hohe Homogenität der optischen Eigenschaften (Brechzahlverteilung, Transmission, Fluoreszenz) aufweist. Als Schlieren oder Schichtungen werden dabei alle lokalen Schwankungen der Brechzahl in einer Größenordnung bezeichnet, die visuell bzw. mit Hilfe der Schattenmethode o. ä. direkt detektiert werden können. Der Begriff der Schlierenfreiheit bezieht sich auf Schlieren oder Schichtungen in mindestens einer Raumrichtung im Glas, vorzugsweise parallel zur optischen Achse des Quarzglaskörpers, die mittig im Quarzglaskörper in seiner Aufwachsrichtung verläuft.

Gemäß der Erfindung wird diese Aufgabe durch die kennzeichnenden Merkmale des ersten Anspruchs gelöst. Die Erfindung ermöglicht die Herstellung von Vorformen mit großen Durchmessern aus synthetischem Quarzglas nach dem Flammenhydrolyse-Verfahren, bei dem der Quarzglaskörper mit Ausnahme eines kleinen Randbereichs über seinen Querschnitt eine sehr gute Brechzahlhomogenität und eine gleichmäßig hohe Transmission aufweist. An der erfindungsgemäßen Relativbewegung zwischen Brenner und Quarzglaskörper können beide beteiligt sein. Wird die Relativbewegung allein dem Brenners übertragen, so lässt sich die Innenkontur der Aufschmelzvorrichtung (Muffel) sehr gut an die gewünschte Glaskontur anpassen. Die Verringerung des Abstandes zwischen Brenneraustrittsöffnung (SiO₂-Quelle) mit zunehmenden Durchmesser der Vorform erfolgt im einfachsten Fall linear mit dem radialen Abstand des Flammenauftreffpunktes von der Rotationsachse der Vorform. Der im Randbereich erreichte Endwert des radialen Abstandes soll nicht kleiner als 65% des zentralen, achsnahen Abstandes sein. Damit wird den unterschiedlichen thermischen Verhältnissen und Abscheidungsbedingungen im Randbereich des sich bildenden Quarzglaskörpers Rechnung getragen. Diese Unterschiede werden durch entsprechend unterschiedliche Prozessvorgaben für den Innen- und Außenbereich des Quarzglaskörpers berücksichtigt. Hierfür ist die Abstandsverringerung zwischen Brenneraustrittsöffnung und Glaskörper bestimmend.
Bei der Erarbeitung der erfindungsgemäßen Lösung wurden folgende Untersuchungen durchgeführt:
- Messung des Geschwindigkeitsfeldes im Inneren der Flamme mittels Laser-Doppler-Anemometrie,
- Messungen des Temperaturfeldes im Inneren der Flamme mittels Raman-Spektroskopie,
- Messung der Partikelverteilung im Inneren der Flamme mittels Rayleigh-Strahlung.

Es hat sich gezeigt, dass sich sowohl die Absolutwerte als auch die Verteilung dieser Messgrößen als Funktion des Abstandes zwischen Brenneraustrittsöffnung und Aufschmelzoberfläche in einem weiten Bereich ändern und deshalb zur gezielten Kontrolle und Steuerung des Aufwachsprozesses verwendet werden können. Aus Raman-Messungen und chemischen Gleichgewichtsrechnungen erhaltene Informationen über lokale chemische Zusammensetzungen in der Brennerflamme eröffnen darüber hinaus die Möglichkeit, die Konzentrationen der intrinsischen Verunreinigungen, bspw. durch Si-OH-Gruppen oder Si-Cl-Gruppen usw., schon in der Herstellungsphase des Quarzglaskörpers entsprechend günstig einzustellen. Auf diese Weise werden ungünstige Temperaturverteilungen und Strömungsverhältnisse und damit Schlierenund Blasenbildungen über den gesamten Querschnitt mit einem Durchmesser oder einer Kantenlänge von mindestens 15 cm vermieden.
Begünstigt werden die hohe optische Homogenität und Transmission im Außen- oder Randbereich des Quarzglaskörpers, wenn die Relativbewegung zwischen Brenner und Glaskörper mit einer Winkeleinstellung bzw. Winkeländerung zwischen Brennerachse und Glaskörperachse einhergeht. Dabei sind beide Achsen in der Aufschmelzvorrichtung, in Richtung der ausströmenden Brenngase aufeinander zu geneigt, ohne einen Schnittpunkt haben zu müssen; sie können also auch windschief zueinander gerichtet sein und keine gemeinsame Ebene haben. Bei stark abfallendem Randbereich des Quarzglaskörpers wird durch Winkellage der Brennerachse zur Glaskörperachse die Verringerung des Abstandes von Brenner zu Glaskörper auf das erforderliche Maß überhaupt erst möglich. Bevorzugt liegt die genannte Winkeländerung zwischen 0° und 60°. In einer bevorzugten Ausführungsform der Erfindung steigt der Winkel zwischen Brennerachse und optischer Achse des Quarzglaskörpers mit zunehmendem Abstand des Flammenauftreffpunktes von der Achse des Quarzglaskörpers monoton, gleichmäßig an. Es trägt zur Zielstellung der Erfindung bei, wenn eine Rotationsbewegung vorzugsweise der walzenförmigen Vorform stattfindet und diese Rotationsbewegung in die Bahnbewegung des Brenners integriert ist, wodurch sich der Aufwand an Verstelleinheiten und Steuerungstechnik verringern lässt. Zur Steuerung der Brennerbewegungen kann eine entsprechend geformte Kulisse dienen.

Vorteilhaft ist es jedoch, die Steuerung mit Hilfe eines Roboters oder eines von einem Rechner gesteuerten Kreuzschlittensystems vorzunehmen. Damit wird eine Dreikoordinatenbewegung des Brenners gewährleistet. Außerdem ist der Brenner parallel zu seiner Achse am Kreuzschlittensystem bzw. am Roboterarm verstellbar gelagert.
Damit es im Aufschmelzprozess nicht zu unerwünschten Wärmeverlusten kommt, ist am Brenner eine gegenüber der Muffel verstellbare Blende befestigt, die die zugehörige Muffelöffnung verschließt. Es können auch mehrere in der Muffelöffnung vorgesehen sein, die gleichzeitig, simultan und/oder unabhängig voneinander verfahrbar sind.

Da es in der Abkühlphase des hergestellten Quarzglaskörpers und in eventuell nachgeschalteten Temperprozessen infolge Diffusion zu deutlichen Konzentrationsänderungen der erwähnten Verunreinigungen kommt, ist bevorzugt eine Konzentrationsverteilung über die Aufschmelzfläche einzuhalten, in der spätere Konzentrationsänderungen durch Diffusion bereits berücksichtigt sind, so dass im Endprodukt eine im wesentlichen gleichmäßige Verteilung erreicht wird. In den durchgeführten Untersuchungen zur Erfindung zeigte sich, daß zur Vergleichmäßigung der optischen Eigenschaften des gebildeten Quarzglaskörpers eine gezielte Kontrolle der Aufwachsbedingungen mit einem definiertem Einbau von gewünschten Struktureffekten über eine Anpassung der Temperatur- und Strömungsverhältnissen sowie der Flammenstöchiometrie im Auftreffbereich der Flamme erforderlich sind. Für die gleichzeitige Optimierung aller dieser Parameter ist die erfindungsgemäße Anordnung mit der Bewegung des Brenners (der SiO₂-Quelle) in Richtung der Achse des Quarzglaskörpers, der vorzugsweise walzenförmig gestaltet ist, in Abhängigkeit von der radialen Position des Brenners relativ zu diesem besonders geeignet.

Ein mit der erfindungsgemäßen Anordnung hergestellter Quarzglaskörper hat eine Brechzahlhomogenität <±1ppm über mindestens 50% seines Durchmessers, der 180 bis 500 mm beträgt. Er hat eine Reintransmission von mindestens 0,995 bei einer Wellenlänge von λ = 193 nm auf eine Dicke von 1 cm bezogen.

Die Erfindung wird nachstehhend an Hand der schematischen Zeichnung von fünf Ausführungsbeispielen in Schnittdarstellungen näher erläutert. Es zeigen:
Fig. 1 die erfindungswesentlichen Teile einer ersten erfindungsgemäßen Anordnung,
Fig. 2 die erfindungswesentlichen Teile einer zweiten erfindungsgemäße Anordnung,
Fig. 3 eine dritte erfindungsgemäße Anordnung mit einer Kulissenführung,
Fig. 4 eine vierte erfindungsgemäße Anordnung mit einer Kreuzschlittenführung und
Fig. 5 eine fünfte, mit einem Roboter ausgerüstete erfindungsgemäße Anordnung.

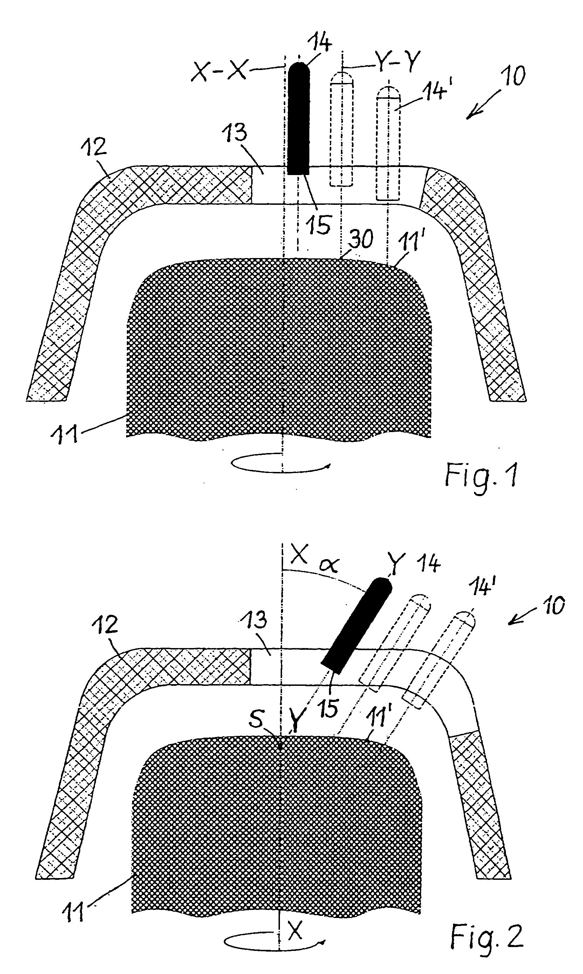

In Fig. 1 ist eine Anordnung 10 zur Erzeugung eines optisch homogenen, schlierenfreien Quarzglaskörpers 11 (Walze) mit einer Aufschmelzfläche oder Aufwachsoberfläche 11' teilweise dargestellt, der um eine Achse X-X drehbar gelagert ist. Der Quarzglaskörper 11 ist von einer teilweise dargestellten Muffel 12 (Schmelzofen) mit einer Öffnung 13 für einen Brenner 14 mit einer Austrittsöffnung 15 umgeben, dessen Längsachse mit Y-Y bezeichnet ist. Die Drehachse X-X und die Längsachse Y-Y sind parallel zueinander gerichtet und hinsichtlich ihres Abstandes veränderbar. Die Achse Y-Y schneidet die Aufwachsoberfläche 11' in einem Punkt 30, dem Auftreffpunkt der Brennerflamme. Der Abstand der dem Quarzglaskörper 11 zugewandten Brenneraustrittsöffnung 15 von diesem Quarzglaskörper ist ebenfalls veränderbar.
Im Verlauf des Aufschmelzprozesses wird mit Hilfe des Brenners 14 und der diesem beigeordneten SiO₂-Quelle SiO₂ mit einer entsprechenden Dotierung von OH- und Cl-Gruppen sowie ggf. anderen auf den ständig rotierenden Quarzglaskörper 11 aufgeschmolzen. Die Rotationsfrequenz des Quarzglaskörpers 11 beträgt 5 min⁻¹ und die Periodendauer, mit der der Brenner 14 zwischen seiner achsnahen, vom Quarzglaskörper entfernteren Endlage und seiner den Quarzglaskörper näheren äußeren Endlage 14' hin und her bewegt wird, 100 s. In der achsnahen Endlage beträgt der Abstand der Brenneröffnung 15 und dem Quarzglaskörper 11 250 mm und in der äußeren Endlage 200 mm. Es versteht sich von selbst, dass die angegebenen Abstände Beispielswerte sind.
Infolge des im Mittel kürzeren Abstandes zwischen der SiO₂-Quelle 14 und der Aufwachsoberfläche 11' des Quarzglaskörpers 11 lässt sich mit der Anordnung gemäß Fig. 1, unter der Voraussetzung einer passend gewählten Brennerdüsengeometrie und geeignet gewählter Gasvolumenströme für die einzelnen Düsen des Brenners, eine höhere Maximaltemperatur im Auftreffbereich realisieren, wodurch die im Randbereich stärkere Wärmeabstrahlung kompensiert wird. Weiterhin ist bei einer kürzeren Flammenlänge der Impuls der Strömung größer und damit die im Randbereich des Quarzglaskörpers 11 in der Nähe der Wand der Muffel 12 besonders große Gefahr undefinierter Strömungsverhältnisse, die zu Blasen- und Schlierenbildungen führt, verringert. Die typischen Konturen des Quarzglaskörpers 11 zeigen am Rand ein abgerundetes Profil. Dadurch wird beim herkömmlichen Verfahren in diesem Bereich der Brennerabstand nicht verkürzt, sondern effektiv verlängert, was die Randeffekte in den optischen Eigenschaften in unerwünschter Weise verstärkt. Dem wird mit der beschriebenen Änderung der Brennerposition entlang der Brennerachse Y-Y in Richtung der Quarzglasoberfläche 11' entgegengewirkt.
Zur genauen Charakterisierung der Brechzahlverteilung und ihrer Randeffekte dient eine Polynomzerlegung der interferometrisch gemessenen Brechzahlverteilung. Aus dieser ergeben sich rotationssymmetrische Beiträge n-ter Ordnung und winkelabhängige Beiträge, die z.B. Koma und Astigmatismus widerspiegeln. Mit zunehmender Ordnung der Polynome nimmt dabei die Anzahl der Wendepunkte in den einzelnen Symmetrieelementen zu, d.h. es werden zunehmend kleinräumige, lokale Brechzahländerungen beschrieben. Da die einzelnen Beiträge der Polynome sich jeweils unterschiedlich auf die optischen Abbildungseigenschaften auswirken, werden sie unterschiedlich spezifiziert. Die Auswirkung der Randeffekte der Brechzahlverteilung spiegelt sich direkt in der Größe der einzelnen Polynomkoeffizienten wider.

In Fig. 2 ist bei sonst gleicher Gestaltung die Achse Y-Y des Brenners 14 gegenüber Achse X-X des Quarzglaskörpers 11 um einen Winkel α geneigt, der zwischen 0 und 45° liegt. Der Abstand der Brenneröffnung 15 von der Quarzglasoberfläche 11' verringert sich mit zunehmendem Abstand des Brenners 14 von der Achse X-X. Der eingestellte Winkel α zwischen der Brennerachse Y-Y und der Achse X-X des Quarzglaskörpers 11 ist durch einen Scheitelpunkt S definiert, der in Richtung der ausstömenden Brenngase liegt und in dem die Verlängerung der Brennerachse Y-Y die Rotationsachse X-X schneidet oder in dem die beiden Achsen bei windschiefer Lage den kleinsten Abstand voneinander haben.
In noch zu beschreibenden günstigen Ausführungsformen kann der Winkel α mit zunehmendem Abstand des Flammenauftreffpunktes von der Achse des Quarzglaskörpers von 0 bis 60° monoton ansteigen. Begünstigt werden dabei die hohe Homogenität und Transmission im Randbereich, wenn die Relativbewegung zwischen Brenner und Quarzglaskörper gleichzeitig mit einer Winkeländerung zwischen der Brennerachse Y-Y und der Drehachse X-X verbunden ist.

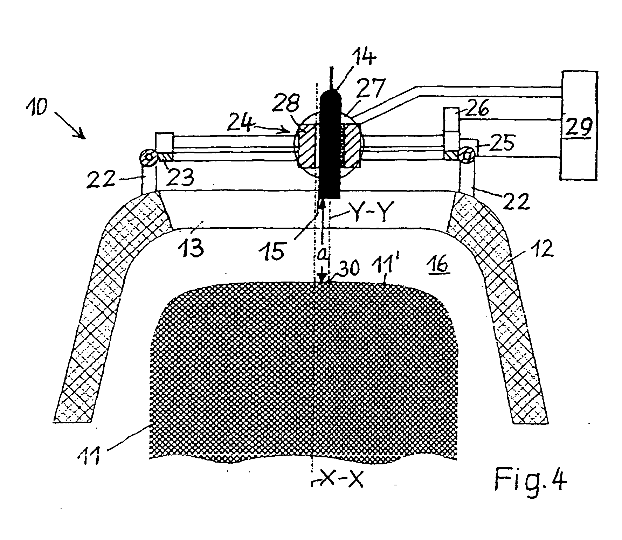

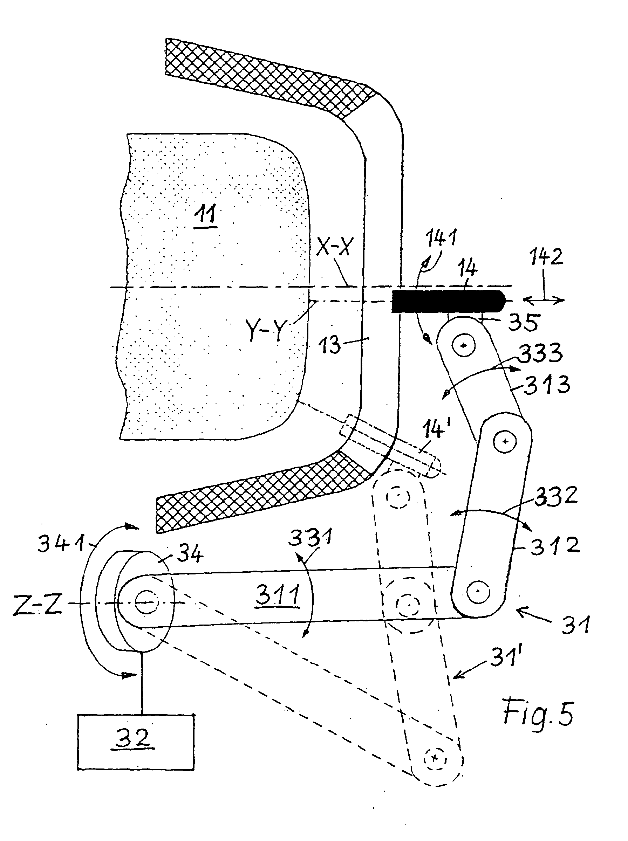

Um die Änderungen in den Strömungsverhältnissen im Muffelraum 16 während der Relativbewegung zwischen SiO₂-Quelle 14 und Aufschmelzfläche 11' am Quarzglaskörper 11 möglichst gering zu halten, wird, wie in den Figuren 1 und 2 dargestellt, bevorzugt die SiO₂-Quelle selbst, d.h. der Brenner 14, bewegt. Dadurch kann die Innenfläche der Muffel 12 unmittelbar an die Kontur des Quarzglaskörpers 11 angepasst werden, es ist kein zusätzlicher Raum wie bspw. beim Verfahren des gesamten Glaskörpers 11 erforderlich. Außerdem wird die Bewegung großer Massen und damit eine aufwendige Verstellmechanik vermieden. Dies hat zur Folge, dass die mögliche maximale Verstellgeschwindigkeit erhöht werden kann und die Gefahr von Eigenschwingungen der gesamten Anordnung reduziert wird.
Es ist weiterhin eine Ausführungsform der erfindungsgemäßen Anordnung möglich, bei der nicht nur eine konstante Umdrehungszahl des Quarzglaskörpers 11 mittels eines Steuerungsprogramms mit dem Bewegungsablauf des Brenners 14 verknüpft ist, sondern sich auch die Umdrehungszahl des Quarzglaskörpers in Abhängigkeit von der radialen Position des Flammenauftreffpunktes verändert. Dabei ist die Drehzahl des Quarzglaskörpers 11 generell dann am geringsten, wenn der Flammenauftreffpunkt seinen größten radialen Abstand von der Achse X-X hat, und am größten, wenn der Abstand des Flammenauftreffpunktes von der Achse X-X ein Minimum wird. Bspw. ist es günstig, die Drehzahl zwischen einem Minimum von 2 min⁻¹ und einem Maximum von 30 min⁻¹ durch das Steuerprogramm zu variieren. Die Bahnbewegung des Brenners 14 kann auch so gesteuert werden, dass der Quarzglaskörper 11 nicht zu rotieren braucht (siehe Figuren 4 und 5). Dadurch läßt sich der Aufwand an Verstelleinheiten und Steuerungstechnik weiter verringern.
Eine kostengünstige erfindungsgemäße Anordnung ergibt sich, wenn Brenner, Muffel und Achse des Quarzglaskörpers im wesentlichen horizontal angeordnet sind, da hierbei übliche Drehbänke zur Aufnahme und Rotation der Quarzglaswalze (wenn diese rotiert) verwendet werden können.

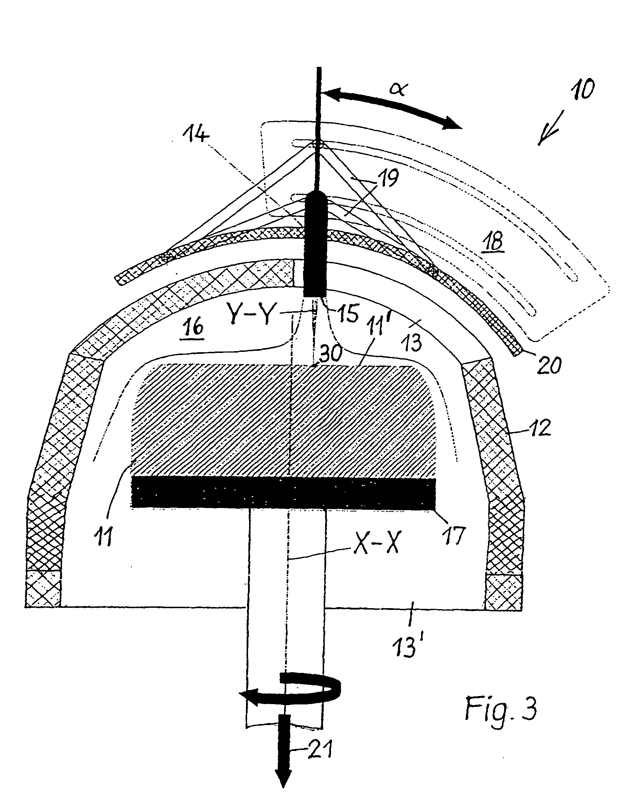

In Fig. 3 ist eine Anordnung 10 zur Erzeugung eines optisch homogenen, schlierenfreien Quarzglaskörpers 11 im Innenraum 16 einer Muffel 12 dargestellt, der sich auf einem um eine Achse X-X rotierenden Teller 17 befindet und parallel zur Achse X-X verstellbar ist. Diese durch einen Pfeil 21 gekennzeichnete Verstellung des Tellers 17 findet in Übereinstimmung mit dem Aufwachsen des Quarzglaskörpers 11 statt. Die Muffel 12 weist einerseits eine Öffnung 13 auf, in der über ein Gestänge 19 mindestens ein Brenner 14 mit einer Öffnung 15 bzw. ein Brenner mit einer oder mehreren Düsen nach Maßgabe einer Kulissenführung 18 verschiebbar ist. Andererseits ist die Muffel 12 mit einer Öffnung 13' versehen, durch die der Quarzglaskörper aus der Muffel herausgefahren werden kann, die größer ist als die Öffnung 13 und dieser gegenüberliegt. Die Kulissenführung 18 bewirkt mit einer Veränderung des Abstandes des Flammenauftreffpnktes 30 von der Achse X-X von 0 auf 15 cm eine Veränderung des von den Achsen X-X und Y-Y eingeschlossenen Winkels α von 0 auf 35° sowie eine Veränderung des Abstandes der Brenneröffnung 15 vom Flammenauftreffpunkt 30 von 30 cm auf 18,5 cm. Mit dem verfahrbaren, eine Si-Verbindung und Brenngase liefernden Brenner 14 ist eine Blende 20 verbunden, die den nicht vom Brenner eingenommenen Raum der Öffnung 13 abdeckt und dadurch eine unerwünschte Wärmeabstrahlung weitestgehend vermeidet. Die Öffnung 3 und die Kulissenführung 18 können sich auch über den gesamten Quarzglaskörper 11, also zu beiden Seiten der Achse X-X in Fig. 3 erstrecken. Im übrigen gilt das bisher Gesagte sinngemäß.

In Fig. 4 sind die wesentlichen Teile einer erfindungsgemäßen Anordnung 10 dargestellt. Im Innenraum 16 einer Aufschmelzvorrichtung 12 mit einer Öffnung 13 ist eine Vorform 11 mit einer Achse X-X angeordnet, die mit der geometrischen Achse der Aufschmelzvorrichtung 12 zusammenfällt. Außerdem ist die Vorform 11 aus der Aufschmelzvorrichtung 12 parallel zur Achse X-X um dem Aufschmelzbetrag aus der Aufschmelzvorrichtung 12 bewegbar angeordnet. Außen an der Aufschmelzvorrichtung 12 ist mindestens ein Träger 22 für ein Kreuzschlittensystem 23, 24 vorgesehen, von denen der tragende Schlitten 23 parallel zur Zeichenebene und der getragene Schlitten 24 senkrecht zur Zeichenebene mit Hilfe von Antrieben 25, 26 bewegbar angeordnet ist. Am getragenen Schlitten 24 ist eine Schwenkeinrichtung 27 und an dieser eine Längsverstelleinrichtung 28 für einen Brenner 14 befestigt, mit deren Hilfe der Brenner 14 mit seiner Achse Y-Y gegenüber der Achse X-X neigbar und mit seiner Öffnung 15 bezüglich des Abstandes von der Aufschmelzfläche 11' einstellbar ist. Dieser Abstand a ist exakt zu verstehen als der Abstand zwischen der Brenneröffnung 15 und dem Flammenauftreffpunkt 30. Er ist um so geringer, je größer der Abstand des Flammenauftreffpunktes von der Achse X-X ist. Im vorliegenden Beispiel beträgt der Abstand a der Brenneröffnung 15 bei der größtmöglichen Entfernung des Flammenaauftreffpunktes 30 von der Achse X-X 0,6a und der zugehörige Winkel α = 35°. Die Schlittenantriebe 25, 26 sowie die Schwenkeinrichtung 27 und die Längsverstelleinrichtung 28 sind mit einer Steuereinrichtung 29 für die einzelnen Bewegungen über entsprechende Leitungen verbunden, die eine voneinander unabhängige rechnergestützte Ansteuerung der einzelnen Antriebsmittel ermöglicht.
Die einen Rechner enthaltende Steuereinrichtung 29 ermöglicht nicht nur die Integration der Rotation des Quarzglaskörpers 11 um die Achse X-X in die Bewegung des Brenners 14, sondern sie schafft auch die Voraussetzung, periodische Strukturen zu vermeiden, die sich in Brechzahlinhomogenitäten widerspiegeln würden. Hierzu wird bspw. den vorstehend beschriebenen Bewegungen des Brenners 14 in einer Ebene rechtwinklig zur Achse X-X eine im Mittel nicht periodische, statistische Bewegung mit Hilfe eines geeigneten Programms im Rechner überlagert.

In Fig. 5 ist an Stelle des Kreuzschlittensystems 23, 24 der Fig. 4 ein dreiteiliger Roboterarm 31 mit einer entsprechenden Ansteuerung 32 für alle Bewegungen vorgesehen. Die Armteile 311, 312, 313 sind, wie durch entsprechende Doppelpfeile 331, 332, 333 angedeutet, gegeneinander verschwenkbar. Der Roboterarm 31 ist an einen Träger 34 angelenkt und mit diesem in Richtung eines Doppelpfeils 341 um eine Achse Z-Z drehbar gelagert, die vorzugsweise parallel zur Achse X-X eines Quarzglaskörpers 11 gerichtet ist. Den Glaskörper 11 umgibt im wesentlichen koaxial eine Muffel 12 mit einer Öffnung 13, in der ein am freien Ende des Roboterarms 31 über ein Zwischenstück 35 gelenkig angebrachter Brenner 14 verfahrbar ist. Der Verstellung des Brenners 14 bspw. in eine Randlage 14', in der der Roboterarm die Lage 31' einnimmt, dienen einmal die Schwenkungen der Armteile 311, 312, 313 und zum anderen die in Richtung eines Doppelpfeils 141 schwenkbare und eines Doppelpfeils 142 linear verstellbare Anordnung des Brenners 14 am freien Ende des Roboterarms 31. Mit der Brennerverstellung verringert sich deutlich sein Abstand vom Quarzglaskörper 11 und verändert sich erkennbar die Winkellage der Achse Y-Y zur Achse X-X. Eine der Übersichtlichkeit halber nicht dargestellte Blende zur Verhinderung von Wärmestrahlungsverlusten kann mit dem Zwischenstück 35 verbunden und mit diesem bewegbar sein. Mit der in Fig. 5 dargestellten Anordnung geht eine weitere Verringerung des Aufwandes an Verstelleinheiten und Steuerungstechnik einher.

Das Kreuzschlittensystem 23, 24 oder der Roboter 31 sind auch dann anwendbar, wenn trotz der etwas höheren Kosten für die Realisierung einer Quarzglaskörperrotation der technologische Vorteil einer dadurch bedingten Vergleichmäßigung der Aufschmelzung auf der Aufschmelzfläche 11' des Quarzglaskörpers 11 genutzt werden kann.

Bei der Ausführung der erfindungsgemäßen Bewegung des Brenners gegenüber einem rotierendem Quarzglaskörper durch Verfahren in radialer Richtung (z.B. ähnlich Fig. 3) kann infolge der damit verbundenen kleineren, schlitzförmigen Öffnung 13 in der Muffel 12 bei geeigneter Betriebsweise auf die Anordnung einer Blende verzichtet werden, ohne dass spürbare Wärmeabstrahlungen auftreten.

Zur Erhöhung von Wärme- und SiO₂-Eintrag können die beschriebenen Vorrichtungen mit mehreren Brennern ausgestattet werden, die in unveränderlicher relativer Position zueinander simultan verfahrbar oder unabhängig voneinander beweglich angebracht sind.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 10: erfindungsgemäße Anordnung
- 11: Quarzglaskörper, Vorform
- 11': Aufschmelzfläche
- 12: Muffel, Aufschmelzvorrichtung
- 13, 13': Öffnungen
- 14: Brenner
- 15: Brenneröffnung
- 16: Innenraum
- 17: Teller
- 18: Kulisse
- 19: Gestänge
- 20: Blende
- 21: Pfeil
- 22: Träger
- 23,24: Schlitten
- 25, 26: Antriebe
- 27: Schwenkeinrichtung
- 28: Längsverstelleinrichtung
- 29: Steuereinrichtung
- 30: Flammenauftreffpunkt
- 31, 31': Roboterarm
- 32: Ansteuerung
- 34: Träger
- 35: Zwischenstück
- 141,142,331, 332, 333, 341: Doppelpfeile
- 311, 312, 313: Armteile
- a: Abstand zwischen 15 und 30

## Patentansprüche

1. Anordnung (10) zur Erzeugung optisch homogener, schlierenfreier Quarzglaskörper (11) mit großen Durchmessern, die eine Aufschmelzvorrichtung (12) mit einen Innenraum (16) aufweist, der gegenüberliegende Öffnungen (13, 13') hat, wobei in einer (13) der gegenüberliegenden Öffnungen mindestens ein Brenner (14) mit einer Achse Y-Y und in der anderen (13') der gegenüberliegenden Öffnungen ein eine Drehachse X-X aufweisender Teller (17) mit einem jeweils zu erzeugenden Quarzglaskörper (11) bewegbar angeordnet ist, **dadurch gekennzeichnet, dass** im Verlauf der Erzeugung zwischen dem Brenner (14) und dem Teller (17) in axialer und radialer Richtung eine Relativbewegung derart stattfindet, dass sich mit zunehmendem Abstand des Brenners (14) von der Drehachse X-X des Tellers (17) der Abstand des Brenners (14) vom Teller (17) verringert, und dass sich auf der Drehachse X-X mindestens ein Punkt befindet, der auch ein Punkt der Achse Y-Y in Richtung der aus dem Brenner (14) ausströmenden Gase ist oder in dem die Achse Y-Y der Drehachse X-X am nächsten kommt.

2. Anordnung gemäß Anspruch 1, **dadurch gekennzeichnet, dass** die Achse Y-Y des Brenners (14) und die Drehachse X-X des Tellers (17) zusammenfallen, wenn der Abstand des Brenners (14) von der Drehachse X-X des Tellers (17) Null ist.

3. Anordnung gemäß Anspruch 1, **dadurch gekennzeichnet, dass** die Achse Y-Y des Brenners (14) und die Drehachse X-X des Tellers (17) in der Aufschmelzvorrichtung (12) aufeinander zu geneigt sind.

4. Anordnung gemäß Anspruch 3, **dadurch gekennzeichnet, dass** die Neigung des Brenners (14) mit dem radialen Abstand des Flammenauftreffpunktes (30) von der Achse X-X des Tellers (17) zunimmt.

5. Anordnung gemäß den Ansprüchen 1 bis 4, **dadurch gekennzeichnet, dass** zur Steuerungen der Bewegungen des Brenners (14) eine Kulisse (18) vorgesehen ist.

6. Anordnung gemäß den Ansprüchen 1 bis 4, **dadurch gekennzeichnet, dass** zur Durchführung der Bewegungen des Brenners (14) rechtwinklig zur Drehachse X-X ein Kreuzschlittensystem (23, 24) vorgesehen ist.

7. Anordnung gemäß Anspruch 6, **dadurch gekennzeichnet, dass** am Kreuzschlittensystem (23, 24) eine Schwenkeinrichtung (27) und eine Längsverstelleinrichtung (28) für den Brenner (16) vorgesehen sind.

8. Anordnung gemäß mindestens einem der Ansprüche 5 bis 7, **dadurch gekennzeichnet, dass** eine die Bewegungen des Brenners (16) steuernde, einen Rechner umfassende Steuereinrichtung (29) vorgesehen ist.

9. Anordnung gemäß mindestens einem der Ansprüche 1 bis 4, **dadurch gekennzeichnet, dass** zur Steuerung der Bewegungen des Brenners (14) ein Roboter vorgesehen ist.

10. Anordnung gemäß mindestens einem der vorstehenden Ansprüche, **dadurch gekennzeichnet, dass** mit dem Brenner (16) eine Blende (20) fest verbunden ist, die die eine (13) der gegenüberliegenden Öffnungen (13, 13') verschließt.

11. Anordnung gemäß Anspruch 1, **dadurch gekennzeichnet, dass** mehrere Brenner vorgesehen sind, die simultan oder unabhängig voneinander bewegbar sind.

12. Anordnung gemäß Anspruch 1, **dadurch gekennzeichnet, dass** sie zumindest während des Aufschmelzprozesses eine solche Lage einnimmt, dass ihre Drehchse X-X horizontal gerichtet ist.

## Claims

1. An arrangement (10) for manufacturing optically homogeneous streak-free quartz glass bodies (11) having large diameters, comprising a melting device (12) with an inner space (16) which is provided with opposite openings (13, 13'), whereby at least one burner (14) having an axis Y-Y is arranged in one (13) of the opposite openings and a disc (17) having an axis of rotation X-X with a quartz glass body (11) to be manufactured in each case is displaceably arranged in the other one (13') of the opposite openings, **characterized in that** in the course of manufacturing said quartz glass body a relative movement takes place between the burner (14) and the disc (17) in axial and radial directions in such a manner that the distance between the burner (14) and the disc (17) is reduced with the increasing distance of the burner (14) from the axis of rotation X-X of the disc (17), and that on the axis of rotation X-X at least one point is positioned which is also a point of the axis Y-Y towards the gases escaping from the burner (14) or in which the axis Y-Y is nearest to the axis of rotation X-X.

2. An arrangement as claimed in claim 1, **characterized in that** the axis Y-Y of the burner (14) and the axis of rotation X-X of the disc (17) will coincide, if the distance between the burner (14) and the axis of rotation X-X of the disc (17) is zero.

3. An arrangement as claimed in claim 1, **characterized in that** the axis Y-Y of the burner (14) and the axis of rotation X-X of the disc (17) are inclined towards each other in the melting device (12).

4. An arrangement as claimed in claim 3, **characterized in that** the inclination of the burner (14) increases with the radial distance of the impingement point of the flame (30) from the axis X-X of the disc (17).

5. An arrangement as claimed in claims 1 to 4, **characterized in that** a link motion device (18) is provided for controlling the movements of the burner (14).

6. An arrangement as claimed in claim 1 to 4, **characterized in that** a cross-slide system (23, 24) is provided to perform the movements of the burner (14) at right angles to the axis X-X.

7. An arrangement as claimed in claim 6, **characterized in that** a pivot means (27) and a longitudinal displacement device (28) for the burner (14) are provided at the cross-slide system (23, 24).

8. An arrangement as claimed in at least one of the claims 5 to 7, **characterized in that** a control unit (29) including a computer is provided for controlling the movements of the burner (14).

9. An arrangement as claimed in at least one of the claims 1 to 4, **characterized in that** a robot is provided for controlling the movements of the burner (14).

10. An arrangement as claimed in at least one of the preceding claims, **characterized in that** a stop (20) is fixedly connected to the burner (14), said stop being adapted for closing one (13) of the opposite openings (13, 13').

11. An arrangement as claimed in claim 1, **characterized in that** a plurality of burners is provided, being displaceable simultaneously or independently from each other.

12. An arra An arrangement as claimed in claim 1, **characterized in that** the axis Y-Y of the burner (14) and the axis of rotation X-X of the disc (17) will coincide, if the distance between the burner (14) and the axis of rotation X-X of the disc (17) is zero.

## Revendications

1. Dispositif (10) destiné à la fabrication de corps de verre quartzeux homogène et exempt de stries (11), de grands diamètres, présentant un module permettant un processus d'application par fusion (12) et muni d'un espace intérieur (16) doté d'orifices opposés l'un par rapport à l'autre (13, 13'), l'un (13) des orifices opposés comprenant un brûleur (14) avec un axe Y-Y tandis que l'autre ( 13')présente un plateau (17) amovible avec un axe X-X, et portant le corps de verre quartzeux (11) à fabriquer, se trouvant **caractérisé en ce qu'**un mouvement relatif de directions axiale et radiale se produit lors de son élaboration du corps de verre quartzeux, entre le brûleur (14) et le plateau(17), de manière à ce qu'au fur et à mesure de l'agrandissement de l'écart entre le brûleur (14) et l'axe de rotation X-X du plateau (17), la distance entre le brûleur (14) et le plateau (17) diminue, et que, sur l'axe de rotation X-X, se situe au moins soit un point appartenant également à l'axe Y-Y et dans la même direction que celle du gaz émis par le brûleur (14), soit un point où l'axe Y-Y se rapproche le plus de l'axe de rotation X-X.

2. Le dispositif selon la revendication 1 est **caractérisé en ce que** ledit axe Y-Y du brûleur (14) et ledit axe de rotation X-X du plateau (17) coïncident, à condition toutefois que la distance séparant le brûleur (14) et l'axe de rotation X-X du tableau (17) soit égale à zéro.

3. Le dispositif selon la revendication 1 est **caractérisé en ce que**, dans le dispositif d'application par fusion (12), l'axe Y-Y du brûleur (14) et l'axe de rotation X-X du plateau (17) sont inclinés l'un en direction de l'autre.

4. Le dispositif selon la revendication 3 est **caractérisé en ce que** l'inclinaison du brûleur (14) augmente en fonction de l'agrandissement de l'écart radial entre le point d'attaque de la flamme (30) et l'axe X-X du plateau (17).

5. Le dispositif selon les revendications 1 à 4 est **caractérisée en ce qu'**une coulisse (18) est prévue pour assurer la commande des mouvements à exécuter par le brûleur (14).

6. Le dispositif selon les revendications 1 à 4 est **caractérisé en ce qu'**il comprend un système à chariot à croix (23, 24) pour assurer l'exécution des mouvements du brûleur (14) de manière perpendiculaire par rapport à l'axe de rotation X-X.

7. Le dispositif selon la revendication 6 est **caractérisé en ce que** le mécanisme à chariot à croix (23, 24) comprend un dispositif pivotant (27) et un dispositif de réglage (28) du brûleur (16) dans le sens longitudinal.

8. Le dispositif selon au moins une des revendications 5 à 7 est **caractérisé en ce qu'**une unité de contrôle informatisée (29) pilote les mouvements à exécuter par le brûleur (16).

9. Le dispositif selon au moins une des revendications 1 à 4 est **caractérisé en ce qu'**un robot est prévu pour assurer le pilotage des mouvements à exécuter par le brûleur (14).

10. Le dispositif selon au moins une des revendications précédentes, est **caractérisé en ce qu'**un diaphragme (20) est solidairement fixé sur le brûleur (16) pour pouvoir obturer un des orifices (13, 13') se trouvant en position opposée l'un par rapport à l'autre.

11. Le dispositif suivant la revendication 1 est **caractérisé en ce que** plusieurs brûleurs mobiles peuvent agir simultanément ou indépendamment les uns des autres.

12. Le dispositif selon la revendication 1 est **caractérisé en ce que** ledit dispositif occupe, au moins au cours du processus d'application par fusion, une position permettant une orientation horizontale de l'axe de rotation X-X.
